# EUROPEAN PATENT APPLICATION

(11) **EP 4 773 203 A1**
(43) Date of publication of application: **08.07.2026**
(21) Application number: 25829448.7
(22) Date of filing: 24.04.2025
(51) Int. Cl.: H01M 4/13, H01M 10/0587

(54) **ELECTRODE SHEET, CELL AND TERMINAL DEVICE**

(30) Priority: 17.06.2024 CN 202410782009
(71) Applicant: Ningde Amperex Technology Limited, Ningde, Fujian 352100 (CN)
(72) Inventor: LV, Wanwan, Ningde, Fujian 352100 (CN)
(74) Representative: Kraus & Lederer PartGmbB
(86) International application number: PCT/CN2025/090995
(87) International publication number: WO 2025/260965

(57) **Abstract**

An electrode plate, a battery cell, and an electronic device are provided. The electrode plate includes a current collector and a first active material layer. A surface of the first active material layer on a side facing away from the current collector is provided with a plurality of first grooves arranged at equal intervals along a second direction. Viewed along the first direction, each first groove extends from one side of the first active material layer in a third direction to the other side of the first active material layer in the third direction. An extension direction of each first groove is inclined relative to the second direction. Extension directions of the plurality of first grooves are parallel to each other. An angle between the extension direction of the first groove and the second direction is θ, satisfying 0 < θ < 90°. A spacing between two adjacent first grooves in a second direction is W₂, and θ and W₂ satisfy: 0.5 ≤ 1/(W₂ × tanθ) ≤ 1.5, the unit of W₂ is mm. The first groove is conducive to reducing the risk of lithium deposition of the battery cell.

## Description

### TECHNICAL FIELD

This application relates to the technical field of energy storage, and in particular, to an electrode plate, a battery cell, and an electronic device.

### BACKGROUND

In existing jelly-roll battery cells, a corner of a battery cell corresponds to a bent segment of an electrode assembly. During cycling of a battery cell, for reasons such as electrode plate expansion, an electrode plate located at the bent segment squeezes an electrolyte solution out of the corner of the battery cell, resulting in a reduced amount of electrolyte solution at the corner and giving rise to lithium deposition at the corner.

### SUMMARY

In view of the above situation, this application provides an electrode plate that is conducive to reducing the risk of lithium deposition.

An embodiment of this application provides an electrode plate. The electrode plate includes a current collector and a first active material layer. A thickness direction of the current collector is a first direction, a length direction of the current collector is a second direction, and a width direction of the current collector is a third direction. The first active material layer is disposed on one side of the current collector in the first direction. A surface of the first active material layer on a side facing away from the current collector is provided with a plurality of first grooves arranged at equal intervals along a second direction. Viewed along the first direction, each first groove extends from one side of the first active material layer in a third direction to the other side of the first active material layer in the third direction. An extension direction of each first groove is inclined relative to the second direction. Extension directions of the plurality of first grooves are parallel to each other. An angle between the extension direction of the first groove and the second direction is θ, satisfying 0 < θ < 90°. A spacing between two adjacent first grooves in a second direction is W₂, and θ and W₂ satisfy: 0.5 ≤ 1/(W₂ × tanθ) ≤ 1.5.

In the above electrode plate, the surface of the first active material layer on the side facing away from the current collector is provided with a plurality of first grooves arranged at equal intervals along the second direction. The first grooves increase the area infiltrated by an electrolyte solution on the first active material layer, and ensure sufficient contact between the first active material layer and the electrolyte solution. In the case that the electrode plate forms a jelly-roll battery cell, the first groove at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell. 1/(W₂×tanθ) represents the number of intersections between the corner of the battery cell and the first grooves per unit distance. An excessively small number of intersections results in fewer first grooves at the corner of the battery cell, and leads to insufficiency of electrolyte solution replenishment at the corner of the battery cell, thereby giving rise to lithium deposition at the corner of the battery cell. An excessively large number of intersections leads to an excess of the first grooves and an excessively dense arrangement of the first grooves, and is a redundant design without additional benefit, and impairs the energy density of the electrode plate. By defining 0.5 ≤ 1/(W₂ × tanθ) ≤ 1.5, this application reduces the risk of lithium deposition, and increases the energy density of the electrode plate.

In some embodiments of this application, 1/2 < 1/(sinθ × 2) < K/2 and 1 < K < 2.

In the case that the electrode plate forms a jelly-roll battery cell, the middle position of the electrode plate is most prone to lack electrolyte solution along the third direction during cycling of the battery cell. The distance that the electrolyte solution travels from one end of the first groove to the middle position is a maximum transport distance of the electrolyte solution. The maximum transport distance of the electrolyte solution satisfies the following relationship: (W₁/2)/sinθ.

In an extreme case, θ = 90°, and the extension direction of the first groove is the same as the third direction. In this case, the minimum value of the maximum transport distance of the electrolyte solution satisfies the following relationship: W₁/2. The maximum value of the maximum transport distance of the electrolyte solution is limited by a flow velocity of the electrolyte solution. The flow velocity of the electrolyte solution is related to a viscosity of the electrolyte solution, a coating weight of the first active material layer, and a compaction density of the first active material layer. Considering the influence of the three variables, a parameter K is defined, and 1 < K < 2. The value of K is smaller when the viscosity of the electrolyte solution is higher and/or when the coating weight of the first active material layer is greater and/or the compaction density of the first active material layer is greater. The maximum value of the maximum transport distance of the electrolyte solution satisfies the following relationship: K×W₁/2.

The maximum transport distance of the electrolyte solution lies between the minimum value and the maximum values: W₁/2 < (W₁/2)/sinθ < K × W₁/2, simplified to: 1/2 < 1/(sinθ × 2) < K/2. By defining 1/2 < 1/(sinθ × 2) < K/2, this application reduces the risk of electrolyte solution deficiency in the middle position of the electrode plate, thereby reducing the risk of lithium deposition.

In some embodiments of this application, a width of the current collector in the third direction is W₁, an angle between the extension direction of the first groove and the second direction is θ, and a spacing between two adjacent first grooves in the second direction is W₂, satisfying: 30 ≤ (W₁ × W₂ × tanθ)/(sinθ × 2) ≤ 100. (W₁×W₂×tanθ)/(sinθ×2) represents a ratio of the maximum transport distance of the electrolyte solution to the number of intersections between the corner of the battery cell and the first grooves per unit distance. In the case that the electrode plate forms a jelly-roll battery cell, when the ratio of the maximum transport distance of the electrolyte solution to the number of intersections is excessively small, the maximum transport distance of the electrolyte solution is caused to be excessively short, and the number of first grooves at the corner of the battery cell is excessively large, thereby constituting a redundant design without additional benefit, impairing the energy density of the electrode plate, and increasing production cost. When the ratio of the maximum transport distance of the electrolyte solution to the number of intersections is excessively large, the maximum transport distance of the electrolyte solution is caused to be excessively long, and the number of first grooves at the corner of the battery cell is excessively small, thereby leading to insufficiency of electrolyte solution replenishment at the corner of the battery cell, and giving rise to lithium deposition at the corner of the battery cell. By defining 30 ≤ (W₁ × W₂ × tanθ)/(sinθ × 2) ≤ 100, this application reduces the risk of lithium deposition and production cost, and increases the energy density of the electrode plate.

In some embodiments of this application, along the first direction, a thickness h1 of the first active material layer and a depth h2 of the first groove satisfy: 1/6 ≤ h2/hl ≤ 3/4, so as to increase the area infiltrated by the electrolyte solution on the first active material layer, facilitate the formation of electrolyte solution transport channels, and reduce the loss of the energy density of the electrode plate.

In some embodiments of this application, viewed along the extension direction of the first groove, the first groove includes a bottom wall and two sidewalls that are connected to two sides of the bottom wall respectively. Each sidewall is inclined relative to the bottom wall. An opening is formed at an end of the two sidewalls that is away from the bottom wall. A projection of the bottom wall lies within a projection of the opening along the first direction, so as to form a downward tapering groove structure. This structure facilitates the entry of the electrolyte solution into the first groove from the opening, and reduces the first active material layer etched off at the bottom wall, thereby reducing the loss of the energy density of the electrode plate. In addition, each sidewall is inclined relative to the bottom wall, thereby increasing the area infiltrated by the electrolyte solution on the first active material layer, and ensuring sufficient contact between the first active material layer and the electrolyte solution.

In some embodiments of this application, the electrode plate includes two first active material layers. The two first active material layers are disposed on two sides of the current collector respectively along the first direction, so as to increase the energy density of the electrode plate.

In some embodiments of this application, along the first direction, a projection of each first groove of one of the first active material layers is parallel to a projection of one first groove of the other first active material layer, so as to facilitate processing.

In some embodiments of this application, along the first direction, a projection of each first groove of one of the first active material layers intersects with a projection of one first groove of the other first active material layer.

In some embodiments of this application, along the first direction, a thickness H1 of the current collector satisfies: 3 µm ≤ H1 ≤ 15 µm, so as to meet the requirement on the structural strength of the current collector and reduce the space waste caused by a large thickness of the current collector, and in turn, increase the energy density of the electrode plate.

An embodiment of this application further provides a battery cell. The battery cell includes an electrode assembly. The electrode assembly includes a positive electrode plate, a separator, and a negative electrode plate that are wound together. The positive electrode plate or negative electrode plate is the electrode plate disclosed in any one of the above embodiments.

The electrode assembly includes a first straight segment, a first bent segment, a second straight segment, and a second bent segment that are connected in sequence. The first straight segment and the second straight segment are disposed opposite to each other along a thickness direction of the battery cell. The first bent segment and the second bent segment are disposed opposite to each other along a width direction of the battery cell. The electrode plate is provided with a plurality of the first grooves at positions located at the first bent segment and/or the second bent segment.

An embodiment of this application further provides an electronic device. The electronic device includes the battery cell disclosed in the above embodiment.

In the electrode plate, battery cell, and electronic device described above, the surface of the first active material layer on the side facing away from the current collector is provided with a plurality of first grooves arranged at equal intervals along the second direction. The first grooves provide channels for the electrolyte solution to infiltrate the first active material layer, increase the area infiltrated by the electrolyte solution on the first active material layer, and ensure sufficient contact between the first active material layer and the electrolyte solution. In the case that the electrode plate forms a jelly-roll battery cell, the first groove at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell. 1/(W₂×tanθ) represents the number of intersections between the corner of the battery cell and the first grooves per unit distance. An excessively small number of intersections results in fewer first grooves at the corner of the battery cell, and leads to insufficiency of electrolyte solution replenishment at the corner of the battery cell, thereby giving rise to lithium deposition at the corner of the battery cell. An excessively large number of intersections leads to an excess of the first grooves and an excessively dense arrangement of the first grooves, and is a redundant design without additional benefit, and impairs the energy density of the electrode plate. By defining 0.5 ≤ 1/(W₂ × tanθ) ≤ 1.5, this application reduces the risk of lithium deposition, and minimizes the loss of the energy density of the electrode plate.

### BRIEF DESCRIPTION OF DRAWINGS

FIG. 1 is a schematic structural diagram of an electrode plate according to an embodiment of this application;
FIG. 2 is a schematic structural diagram of an electrode plate viewed along a first direction according to an embodiment of this application;
FIG. 3 is a schematic structural diagram of a jelly-roll battery cell formed by an electrode plate according to an embodiment of this application;
FIG. 4 is a schematic structural diagram of an electrode plate viewed along a first direction according to another embodiment of this application;
FIG. 5 is a schematic structural diagram of two first active material layers of an electrode plate according to an embodiment of this application;
FIG. 6 is a schematic structural diagram of a battery cell according to an embodiment of this application; and
FIG. 7 is a structural schematic diagram of an electronic device according to an embodiment of this application.

**List of reference signs:**

| | |
|---|---|
| electrode plate | 100 |
| battery cell | 200 |
| electronic device | 300 |
| current collector | 10 |
| first active material layer | 20 |
| first groove | 21 |
| bottom wall | 211 |
| sidewall | 212 |
| opening | 213 |
| first reference line | E |
| second reference line | F |
| third reference line | G |
| middle position | M |
| electrode assembly | 30 |
| positive electrode plate | 31 |
| separator | 32 |
| negative electrode plate | 33 |
| first straight segment | 30A |
| first bent segment | 30B |
| second straight segment | 30C |
| second bent segment | 30D |
| first direction | Z |
| second direction | X |
| third direction | Y |

This application is further described below with reference to the following specific embodiments and the foregoing drawings.

### DETAILED DESCRIPTION

The following describes the technical solutions in the embodiments of this application with reference to the drawings hereto. Evidently, the described embodiments are merely a part of but not all of the embodiments of this application.

It is noted that a component considered to be "connected to" another component may be directly connected to the other component or may be connected to the other component through an intermediate component. A component considered to be "disposed on" another component may be directly disposed on the other component or may be disposed on the other component through an intermediate component.

When a value is considered to be "equal" to another value, it means that the two values are equal within a preset deviation range of 5%. In other words, when at least one of the two values fluctuates within the preset deviation range, it is still determined that the values are approximately equal even if the values are not exactly equal. When a ratio of one value to another is considered to be "1: 1", it means that the two values are equal within a preset deviation range of 5%. In other words, when at least one of the two values fluctuates within the preset deviation range, it is still determined that the values are approximately equal even if the values are not exactly equal.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated. The term "overlap" used herein means partial overlap of the projections of two components or the coincidence of the projections of two components.

An embodiment of this application provides an electrode plate. The electrode plate includes a current collector and a first active material layer. A thickness direction of the current collector is a first direction, a length direction of the current collector is a second direction, and a width direction of the current collector is a third direction. The first active material layer is disposed on one side of the current collector in the first direction. A surface of the first active material layer on a side facing away from the current collector is provided with a plurality of first grooves arranged at equal intervals along a second direction. Viewed along the first direction, each first groove extends from one side of the first active material layer in a third direction to the other side of the first active material layer in the third direction. An extension direction of each first groove is inclined relative to the second direction. Extension directions of the plurality of first grooves are parallel to each other. An angle between the extension direction of the first groove and the second direction is θ, satisfying 0 < θ < 90°. A spacing between two adjacent first grooves in a second direction is W₂, and θ and W₂ satisfy: 0.5 ≤ 1/(W₂ × tanθ) ≤ 1.5.

In the above electrode plate, the surface of the first active material layer on the side facing away from the current collector is provided with a plurality of first grooves arranged at equal intervals along the second direction. The first grooves increase the area infiltrated by an electrolyte solution on the first active material layer, and ensure sufficient contact between the first active material layer and the electrolyte solution. In the case that the electrode plate forms a jelly-roll battery cell, the first groove at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell. 1/(W₂×tanθ) represents the number of intersections between the corner of the battery cell and the first grooves per unit distance. An excessively small number of intersections results in fewer first grooves at the corner of the battery cell, and leads to insufficiency of electrolyte solution replenishment at the corner of the battery cell, thereby giving rise to lithium deposition at the corner of the battery cell. An excessively large number of intersections leads to an excess of the first grooves and an excessively dense arrangement of the first grooves, and is a redundant design without additional benefit, and impairs the energy density of the electrode plate. By defining 0.5 ≤ 1/(W₂ × tanθ) ≤ 1.5, this application reduces the risk of lithium deposition, and increases the energy density of the electrode plate.

The following further describes the embodiments of this application with reference to drawings.

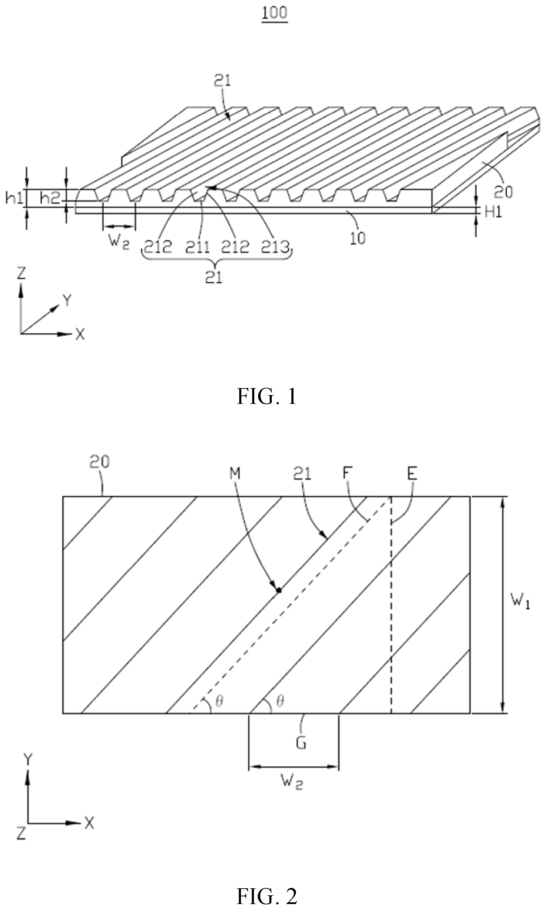

Referring to FIG. 1, an embodiment of this application provides an electrode plate 100. The electrode plate 100 is configured to form an electrode assembly to be applied in a secondary battery. The secondary battery is a battery that is reusable through activation of an active material in the battery by charging the battery that has been discharged.

The electrode plate 100 includes a current collector 10 and a first active material layer 20. The current collector 10 is configured to collect an electrical current. The first active material layer 20 is configured to generate an electrical current and let the current be collected onto the current collector 10. Specifically, the first active material layer 20 is applied onto a surface of the current collector 10 by extrusion coating, transfer coating, spray coating, or other means. Optionally, the electrode plate 100 is of negative electrode polarity or positive electrode polarity.

A thickness direction of the current collector 10 is a first direction Z, a length direction of the current collector 10 is a second direction X, and a width direction of the current collector 10 is a third direction Y. The first direction Z, the second direction X, and the third direction Y are perpendicular to each other. The length direction and the width direction of the current collector 10 are two dimensions of the surface of the current collector 10, respectively. The length direction means a major dimension direction (that is, the direction in which the size is relatively large). The width direction means a minor dimension direction (that is, the direction in which the size is relatively small). Generally, the length direction is identical to the coating direction of each material layer (for example, the first active material layer 20) during processing of the electrode plate 100, and the width direction is perpendicular to the length direction.

Also referring to FIG. 2, the first active material layer 20 is disposed on one side of the current collector 10 in the first direction Z. A surface of the first active material layer 20 on a side facing away from the current collector 10 is provided with a plurality of first grooves 21 arranged at equal intervals along the second direction X. Viewed along the first direction Z, each first groove 21 extends from one side of the first active material layer 20 in the third direction Y to the other side of the first active material layer 20 in the third direction Y. The extension direction of each first groove 21 is inclined relative to the second direction X. Extension directions of the plurality of first grooves 21 are parallel to each other. The first grooves 21 increase the area infiltrated by the electrolyte solution on the first active material layer 20, and ensure sufficient contact between the first active material layer 20 and the electrolyte solution. When the electrode plate 100 forms a jelly-roll battery cell, the first groove 21 at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell.

Optionally, the first groove 21 is formed by laser-etching a surface of the first active material layer 20 on a side facing away from the current collector 10.

Also referring to FIG. 2, an angle between the extension direction of the first groove 21 and the second direction X is θ, and a spacing between two adjacent first grooves 21 in the second direction X is W₂, satisfying: 0.5 ≤ 1/(W₂ × tanθ) ≤ 1.5.

The specific derivation process is as follows:
It is defined that a first reference line E extends along the third direction Y from one side of the first active material layer 20 to the other side of the first active material layer 20; a second reference line F extends along the extension direction of the first groove 21 from one side of the first active material layer 20 to the other side of the first active material layer 20; one end of the first reference line E is connected to one end of the second reference line F; and the other end of the first reference line E is connected to the other end of the second reference line F by a third reference line G. The first reference line E, the second reference line F, and the third reference line G form a right triangle.

The length of the first reference line E is equal to the width W₁ of the current collector 10 in the third direction Y. The angle between the extension direction of the second reference line F and the second direction X is equal to the angle θ between the extension direction of the first groove 21 and the second direction X. The number of first grooves 21 passing through the first reference line E is the same as the number of first grooves 21 passing through the third reference line G.

The number of first grooves 21 passing through the third reference line G can be derived from a ratio of the length of the third reference line G to the spacing W₂ between two adjacent first grooves 21 in the second direction X. The length of the third reference line G satisfies the following relationship: W₁/tanθ. The number of first grooves 21 passing through the third reference line G satisfies the following relationship: (W₁/tanθ)/W₂. Consequently, the number of first grooves 21 passing through the first reference line E satisfies the following relationship: (W₁/tanθ)/W₂. The number of intersections between the first reference line E and the first grooves 21 per unit distance satisfies the following relationship: (W₁/tanθ)/W₂/W₁, simplified to: 1/(W₂×tanθ). The units of W₂ and W₁ are both mm.

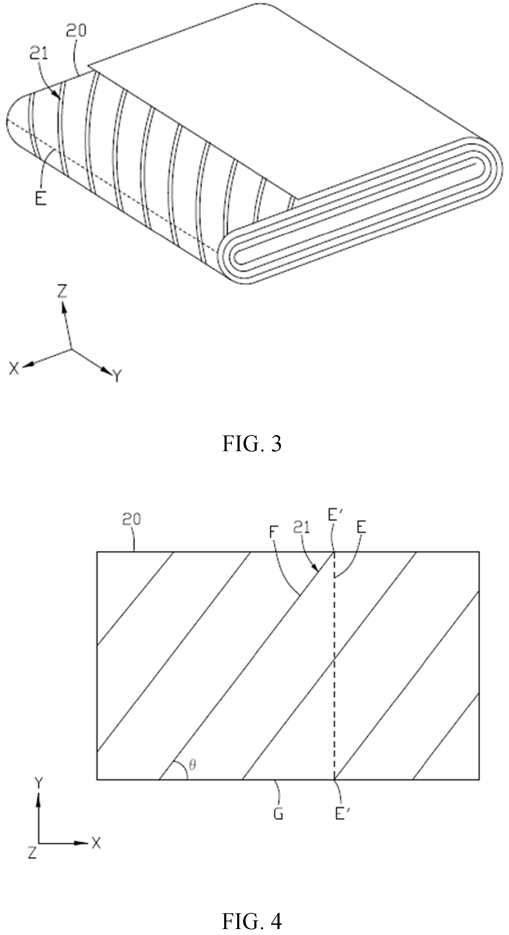

Referring to FIG. 3, in the case that the electrode plate 100 forms a jelly-roll cell, the first reference line E is located at the corner of the battery cell. The number of intersections between the first reference line E and the first grooves 21 per unit distance is the number of intersections between the corner of the battery cell and the first grooves 21 per unit distance. An excessively small number (less than 0.5) of intersections results in fewer first grooves 21 at the corner of the battery cell, and leads to insufficiency of electrolyte solution replenishment at the corner of the battery cell, thereby giving rise to lithium deposition at the corner of the battery cell. An excessively large number (greater than 1.5) of intersections leads to an excess of the first grooves 21 and an excessively dense arrangement of the first grooves 21, and is a redundant design without additional benefit, and impairs the energy density of the electrode plate 100. By defining 0.5 ≤ 1/(W₂ × tanθ) ≤ 1.5, this application reduces the risk of lithium deposition, and increases the energy density of the electrode plate 100.

Further, by satisfying the above formula, this application can reduce the error in measuring the width W₁ of the current collector 10 in the third direction Y, and improve accuracy.

Referring to FIG. 4, it is noted that when two endpoints E' of the first reference line E in the third direction Y coincide with two different first grooves 21 respectively, the two endpoints of the first reference line E in the third direction Y are counted as one intersection, so as to conform to the above formula.

Still referring to FIG. 2, in some embodiments, it is defined that parameter K is related to the following three conditions: a) a coating weight of the first active material layer 20; b) a compaction density of the first active material layer 20; and c) a viscosity of the electrolyte solution in contact with the first active material layer 20. The greater the coating weight of the first active material layer 20, the smaller the value of parameter K; the greater the compaction density of the first active material layer 20, the smaller the value of parameter K; and the greater the viscosity of the electrolyte solution, the smaller the value of parameter K. In view of the value ranges of the three conditions, parameter K is set to satisfy 1 < K < 2.

Optionally, the value of K is 1.1, 1.2, 1.3, 1.4, 1.5, 1.6, 1.7, 1.8, 1.9, or any other value within the range of 1 < K < 2.

In some embodiments, the angle θ between the extension direction of the first groove 21 and the second direction X and the parameter K satisfy: 1/2 < 1/(sinθ × 2) < K/2.

The specific derivation process is as follows:
In the case that the electrode plate 100 forms a jelly-roll battery cell, the middle position M of the electrode plate 100 is most prone to lack electrolyte solution along the third direction Y during cycling of the battery cell. The distance that the electrolyte solution travels from one end of the first groove 21 to the middle position M is a maximum transport distance of the electrolyte solution. The maximum transport distance of the electrolyte solution satisfies the following relationship: (W₁/2)/sinθ.

In an extreme case, θ = 90°, and the extension direction of the first groove 21 is the same as the third direction Y. In this case, the minimum value of the maximum transport distance of the electrolyte solution satisfies the following relationship: W₁/2. The maximum value of the maximum transport distance of the electrolyte solution is limited by a flow velocity of the electrolyte solution. The flow velocity of the electrolyte solution is related to a viscosity of the electrolyte solution, a coating weight of the first active material layer, and a compaction density of the first active material layer. Considering the influence of the three variables, a parameter K is defined, and 1 < K < 2. The value of K is smaller when the viscosity of the electrolyte solution is higher and/or when the coating weight of the first active material layer is greater and/or the compaction density of the first active material layer is greater. The maximum value of the maximum transport distance of the electrolyte solution satisfies the following relationship: K×W₁/2.

The maximum transport distance of the electrolyte solution lies between the minimum value and the maximum values: W₁/2 < (W₁/2)/sinθ < K × W₁/2, simplified to: 1/2 < 1/(sinθ × 2) < K/2. By defining 1/2 < 1/(sinθ × 2) < K/2, this application reduces the risk of electrolyte solution deficiency in the middle position M of the electrode plate 100, thereby reducing the risk of lithium deposition.

Further, by satisfying the above formula, this application can reduce the error in measuring the width W₁ of the current collector 10 in the third direction Y, and improve accuracy.

Still referring to FIG. 2, in some embodiments, the width of the current collector 10 in the third direction Y is W₁, the angle between the extension direction of the first groove 21 and the second direction X is θ, and the spacing between two adjacent first grooves 21 in the second direction X is W₂, satisfying: 30 ≤ (W₁ × W₂ × tanθ)/(sinθ × 2) ≤ 100.

The specific derivation process is as follows:
The maximum transport distance of the electrolyte solution satisfies the following relationship: (W₁/2)/sinθ. The number of intersections between the corner of the battery cell 200 and the first grooves 21 per unit distance satisfies the following relationship: 1/(W₂×tanθ). The ratio of the maximum transport distance of the electrolyte solution to the number of intersections between the corner of the battery cell 200 and the first grooves 21 per unit distance satisfies the following relationship: (W₁×W₂×tanθ)/(sinθ×2).

In the case that the electrode plate 100 forms a jelly-roll battery cell, when the ratio of the maximum transport distance of the electrolyte solution to the number of intersections is excessively small (less than 30), the maximum transport distance of the electrolyte solution is caused to be excessively short, and the number of first grooves 21 at the corner of the battery cell is excessively large, thereby constituting a redundant design without additional benefit, impairing the energy density of the electrode plate 100, and increasing production cost. When the ratio of the maximum transport distance of the electrolyte solution to the number of intersections is excessively large (greater than 100), the maximum transport distance of the electrolyte solution is caused to be excessively long, and the number of first grooves 21 at the corner of the battery cell is excessively small, thereby leading to insufficiency of electrolyte solution replenishment at the corner of the battery cell, and giving rise to lithium deposition at the corner of the battery cell. By defining 30 ≤ (W₁ × W₂ × tanθ)/(sinθ × 2) ≤ 100, this application reduces the risk of lithium deposition and production cost, and increases the energy density of the electrode plate 100.

Still referring to FIG. 1, in some embodiments, along the first direction Z, the thickness h1 of the first active material layer 20 and the depth h2 of the first groove 21 satisfy: 1/6 ≤ h2/hl ≤ 3/4. When h2/hl is excessively small (less than 1/6), the area infiltrated by the electrolyte solution on the first active material layer 20 is caused to be excessively small, and it is difficult to form of an electrolyte solution transport channel. When h2/h1 is excessively large (greater than 3/4), the energy density of the electrode plate 100 is impaired. By defining 1/6 ≤ h2/hl ≤ 3/4, this application increases the area infiltrated by the electrolyte solution on the first active material layer 20, facilitates the formation of electrolyte solution transport channels, and reduces the loss of the energy density of the electrode plate 100.

Optionally, the value of h2/hl is 1/6, 1/3, 5/12, 1/2, 7/12, 2/3, 3/4, or any other value within the range of 1/6 ≤ h2/hl ≤ 3/4.

Still referring to FIG. 1, in some embodiments, viewed along the extension direction of the first groove 21, the first groove 21 includes a bottom wall 211 and two sidewalls 212 that are connected to two sides of the bottom wall 211 respectively. Each sidewall 212 is inclined relative to the bottom wall 211. An opening 213 is formed at an end of the two sidewalls 212 that is away from the bottom wall 211. A projection of the bottom wall 211 lies within a projection of the opening 213 along the first direction Z, so as to form a downward tapering groove structure. This structure facilitates the entry of the electrolyte solution into the first groove 21 from the opening 213, and reduces the first active material layer 20 etched off at the bottom wall 211, thereby reducing the loss of the energy density of the electrode plate 100. In addition, each sidewall 212 is inclined relative to the bottom wall 211, thereby increasing the area infiltrated by the electrolyte solution on the first active material layer 20, and ensuring sufficient contact between the first active material layer 20 and the electrolyte solution.

Understandably, in other embodiments, at least one sidewall 212 is configured as an arcuate surface to reduce the first active material layer 20 etched off at the sidewall 212 and reduce the loss of the energy density of the electrode plate 100.

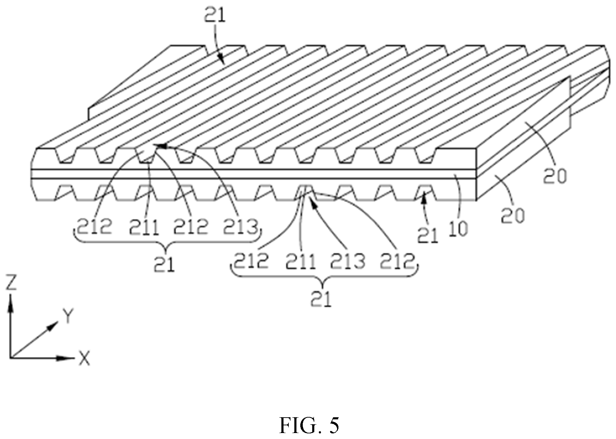

Referring to FIG. 5, in some embodiments, the electrode plate 100 includes two first active material layers 20. The two first active material layers 20 are disposed on two sides of the current collector 10 respectively along the first direction Z, so as to increase the energy density of the electrode plate 100.

A surface of each first active material layer 20 on a side facing away from the current collector 10 is provided with a plurality of first grooves 21 arranged at equal intervals along the second direction X, so as to further increase the area infiltrated by the electrolyte solution on the first active material layer 20, and ensure sufficient contact between the first active material layer 20 and the electrolyte solution. In the case that the electrode plate 100 forms a jelly-roll battery cell, the first grooves 21 at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell.

In some embodiments, along the first direction Z, the projection of each first groove 21 of one of the first active material layers 20 is parallel to the projection of one first groove 21 of the other first active material layer 20, so as to facilitate processing.

Optionally, along the first direction Z, the projection of each first groove 21 of one of the first active material layers 20 coincides with the projection of one first groove 21 of the other first active material layer 20.

In some embodiments, along the first direction Z, the projection of each first groove 21 of one of the first active material layers 20 intersects with the projection of one first groove 21 of the other first active material layer 20.

Still referring to FIG. 1, in some embodiments, along the first direction Z, the thickness H1 of the current collector 10 satisfies: 3 µm ≤ H1 ≤ 15 µm, so as to meet the requirement on the structural strength of the current collector 10 and reduce the space waste caused by a large thickness of the current collector 10, and in turn, increase the energy density of the electrode plate 100.

Optionally, the value of H1 may be 3 µm, 4 µm, 5 µm, 6 µm, 7 µm, 8 µm, 9 µm, 10 µm, 11 µm, 12 µm, 13 µm, 14 µm, 15 µm, or any other value within the range of 3 µm ≤ H1 ≤ 15 µm.

Optionally, the current collector 10 is a metallic current collector or a composite current collector.

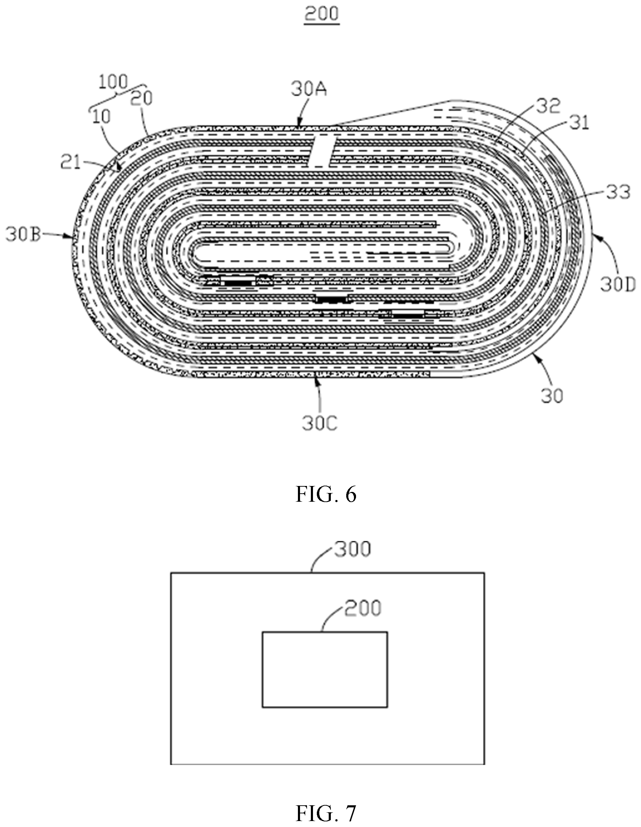

Also referring to FIG. 3 and FIG. 6, an embodiment of this application further provides a battery cell 200. The battery cell 200 includes an electrode assembly 30. The electrode assembly 30 is configured to convert chemical energy into electrical energy. The electrode assembly 30 includes a positive electrode plate 31, a separator 32, and a negative electrode plate 33 that are wound together. The positive electrode plate 31 or the negative electrode plate 33 is the electrode plate 100 disclosed in any one of the above embodiments.

In some embodiments, the electrode assembly 30 includes a first straight segment 30A, a first bent segment 30B, a second straight segment 30C, and a second bent segment 30D that are connected in sequence. The first straight segment 30A and the second straight segment 30C are disposed opposite to each other along the thickness direction of the battery cell 200. The first bent segment 30B and the second bent segment 30D are disposed opposite to each other along the width direction of the battery cell 200. The electrode plate 100 is provided with a plurality of the first grooves 21 at positions located at the first bent segment 30B and/or the second bent segment 30D.

Referring to FIG. 7, an embodiment of this application further provides an electronic device 300. The electronic device 300 includes the battery cell 200 disclosed in any one of the above embodiments. Optionally, the electronic device 300 may be a vehicle, a mobile phone, a portable device, a notebook computer, a ship, a spacecraft, an electric toy, an electric tool, or the like.

The following describes specific implementations of the battery cell 200 in each embodiment and comparative embodiment.

### Embodiment 1

A battery cell 200 with a capacity of 4 Ah is assembled in the following process:
(1) Preparation of a negative electrode plate: Mixing artificial graphite as a negative active material, conductive carbon black (Super P), styrene-butadiene rubber (SBR), and sodium carboxymethyl cellulose (CMC) at a mass ratio of 97:0.5:1.3:1.2 (the mixing ratio is adjustable). Adding deionized water as a solvent to formulate a slurry in which the mass percent is 50 wt%, and stirring well. Coating one surface of 6 µm-thick negative current collector copper foil with the slurry evenly, and then drying the slurry at a temperature of 110 °C to obtain a negative electrode plate coated with a negative active material layer on a single side. In the case of preparing a double-side-coated negative electrode plate, repeating the above steps on the other surface of the negative electrode plate to obtain a negative electrode plate coated with the negative active material layer on both sides. Subsequently, cold-pressing the coated electrode plate to a thickness of 105 µm, laser-etching a surface of the negative active material layer on a side facing away from the negative current collector to form a first groove, and then welding a negative tab onto the copper foil, where the negative tab is made of nickel or nickel-plated copper.
(2) Preparation of a positive electrode plate: Mixing lithium cobalt oxide (LiCoO₂) as a positive active material, conductive carbon black (super P), carbon nanotubes (CNTs), and polyvinylidene fluoride (PVDF) at a mass ratio of 97.5:0.5:0.5:1.5, and adding N-methylpyrrolidone (NMP) as a solvent to form a slurry in which the solid content is 75 wt%, and stirring well. Coating one surface of positive current collector aluminum foil with the slurry evenly, and then drying the slurry at 90 °C to obtain a positive electrode plate coated with the positive active material on a single side. In the case of preparing a double-side-coated positive electrode plate, repeating the above coating steps on the other surface of the aluminum foil. Subsequently, cold-pressing the coated electrode plate to a thickness of 95 µm, and welding a positive tab onto the aluminum foil, where the positive tab is made of aluminum.
(3) Preparation of an electrolyte solution: Mixing ethylene carbonate (EC), ethyl methyl carbonate (EMC), and diethyl carbonate (DEC) at a weight ratio of EC : EMC : DEC = 30 : 50 : 20 in an dry argon atmosphere to form a base organic solvent, then adding lithium salt hexafluorophosphate (LiPF₆) into the base organic solvent to dissolve, and mixing the solution evenly to obtain an electrolyte solution in which a lithium salt concentration is 1.15 mol/L.
(4) Preparation of a separator: Using 7 µm-thick polyethylene porous polymer film as a separator.
(5) Preparation of an electrode assembly: Winding the positive electrode plate, the separator, and the negative electrode plate together.
(6) Assembling of the electrode assembly: Placing a cavity-formed aluminum laminated film into an assembly fixture, with the cavity side facing upward. Placing the electrode assembly into the cavity, and pressing the electrode assembly tightly by exerting an external force. Subsequently, covering the electrode assembly with another cavity-formed aluminum laminated film, with the cavity side facing downward. Heat-sealing the peripheries of the two aluminum laminated films by hot pressing to obtain an assembled electrode assembly.
(7) Electrolyte injection and sealing: Injecting an electrolyte solution into the assembled electrode assembly, and performing steps such as vacuum sealing, static standing, hot-pressing, chemical formation, and shaping to obtain a secondary battery.

### Cycle performance test pass rate

Testing battery cells in groups, each group containing 20 samples. Charging and discharging the samples at 25 °C for a plurality of cycles. Recording a pass of test if the capacity retention rate of the battery cell remains greater than 80% after 800 cycles, where the capacity retention rate is calculated by dividing the discharge capacity of the battery cell at the end of the 800^{th} cycle by the first-cycle discharge capacity of the battery cell. Dividing the number of battery cells passing the test by the total number (20) of tested battery cells to obtain the cycle performance test pass rate.

### 25 °C cycle performance test procedure

Using a battery performance testing machine (brand: Neware; model: CT-4008W-5V6A-80CH), charging a battery cell at a current of 4A (at a charge rate of 1C) until the voltage reaches a cutoff voltage of 4.5 V, and then charging the battery cell at a constant voltage until a cutoff current of 200 mA (0.05C), and then leaving the battery cell to stand for 10 minutes. Subsequently, discharging the battery cell at a current of 2A (0.5C) until the voltage reaches 3 V, and leaving the battery cell to stand for 10 minutes, thereby completing 1 cycle. Recording the discharge capacity at this time as 1^{st}-cycle discharge capacity. Subsequently, repeating the charge-and-discharge cycles.

**Table 1**

| Serial number | W₁ (mm) | Viscosity of electrolyte solution (mPa·s) | K value | W₂(mm) | θ | 1/(W₂×tanθ) | 1/(sinθ×2) | (W₁×W₂×tanθ) /(sinθ×2) | Cycle performance test pass rate |
|---|---|---|---|---|---|---|---|---|---|
| Comparative Embodiment 1 | 78 | 6 | 1.5 | / | / | / | / | / | 40% |
| Comparative Embodiment 2 | 78 | 6 | 1.5 | 2 | 90° | No intersection | 0.50 | No intersection | 60% |
| Comparative Embodiment 3 | 78 | 6 | 1.5 | 1.38 | 56.4° | 0.48 | 0.60 | 97.91 | 70% |
| Comparative Embodiment 4 | 78 | 6 | 1.5 | 0.43 | 56.4° | 1.54 | 0.60 | 30.51 | 100% |
| Embodiment 1 | 78 | 6 | 1.5 | 1.32 | 56.4° | 0.50 | 0.60 | 97.91 | 75% |
| Embodiment 2 | 78 | 6 | 1.5 | 1.27 | 56.4° | 0.52 | 0.60 | 90.11 | 85% |
| Embodiment 3 | 78 | 6 | 1.5 | 0.66 | 56.4° | 1.00 | 0.60 | 46.83 | 95% |
| Embodiment 4 | 78 | 6 | 1.5 | 0.46 | 56.4° | 1.44 | 0.60 | 32.64 | 100% |
| Embodiment 5 | 78 | 6 | 1.5 | 0.44 | 56.4° | 1.50 | 0.60 | 31.22 | 100% |
| Embodiment 6 | 78 | 6 | 1.5 | 1.12 | 41.8° | 1.00 | 0.75 | 58.02 | 90% |
| Embodiment 7 | 78 | 6 | 1.5 | 1.19 | 39.9° | 1.00 | 0.78 | 60.91 | 90% |
| Embodiment 8 | 46.64 | 6 | 1.5 | 0.66 | 56.4° | 1.00 | 0.60 | 28.00 | 100% |
| Embodiment 9 | 49.97 | 6 | 1.5 | 0.66 | 56.4° | 1.00 | 0.60 | 30.00 | 100% |
| Embodiment 10 | 108.27 | 6 | 1.5 | 0.66 | 56.4° | 1.00 | 0.60 | 65.00 | 90% |
| Embodiment 11 | 166.57 | 6 | 1.5 | 0.66 | 56.4° | 1.00 | 0.60 | 100.00 | 90% |
| Embodiment 12 | 183.22 | 6 | 1.5 | 0.66 | 56.4° | 1.00 | 0.60 | 110.00 | 85% |
| Embodiment 13 | 199.88 | 6 | 1.5 | 0.66 | 56.4° | 1.00 | 0.60 | 120.00 | 80% |

| | | | | | | | | | |
|---|---|---|---|---|---|---|---|---|---|
| Note: "/" represents absence of the experimental data. | | | | | | | | | |

In Comparative Embodiment 1, the electrode plate 100 is not provided with any groove. In Comparative Embodiment 2, the electrode plate 100 is provided with grooves, and the extension direction of the grooves is perpendicular to the second direction X, that is, the angle θ between the two directions is 90°. In Comparative Embodiments 1 to 4 and Embodiments 2 to 13, parameters are the same as those in Embodiment 1 except those set forth in Table 1.

As can be seen from Comparative Embodiment 1 and Comparative Embodiments 2 to 4 versus Embodiments 1 to 13, the grooves provided on the electrode plate significantly improve the cycle performance test pass rate of the battery cell 200.

As can be seen from Comparative Embodiment 2 and Comparative Embodiments 3 to 4 versus Embodiments 1 to 13, when the angle θ between the first groove 21 and the second direction X is set to fall within 0 < θ < 90°, the cycle performance test pass rate of the battery cell 200 is further improved compared with the case in which the angle is set to θ = 90°.

As can be seen from Comparative Embodiments 3 to 4 versus Embodiments 1 to 5, when the value of θ remains constant, the number of intersections between the corner of the battery cell 200 and the first grooves 21 per unit distance, denoted as 1/(W₂×tanθ), affects the cycle performance test pass rate of the battery cell 200. Specifically, when 1/(W₂×tanθ) ≤ 1.00, the cycle performance test pass rate of battery cell 200 gradually increases with the increase of the value of 1/(W₂×tanθ), and the increment is relatively large; when 1/(W₂×tanθ) > 1.00, the increment of the cycle performance test pass rate of the battery cell 200 gradually slows down with the increase of the value of 1/(W₂×tanθ); when 1/(W₂×tanθ) ≥ 1.50, the cycle performance test pass rate of the battery cell 200 remains steadily at 100%, and further increase of 1/(W₂×tanθ) contributes no more benefit to the cycle performance of the battery cell 200, but the increased number of first grooves 21 results in redundant design, increases manufacturing cost, and impairs the energy density of the electrode plate 100. When 0.5 ≤ 1/(W₂ × tanθ) ≤ 1.5, the cycle performance test pass rate of the battery cell 200 is up to 75% or more, and this value range is an optimal range of 1/(W₂×tanθ).

As can be seen from Embodiment 3 versus Embodiments 6 and 7, in the case that the number of intersections between the corner of the battery cell 200 and the first grooves 21 per unit distance, denoted as 1/(W₂×tanθ), remains constant, the cycle performance test pass rate of the battery cell 200 decreases to some extent when 1/(sinθ × 2) ≥ 2/K.

As can be seen from Embodiment 3 versus Embodiments 8 to 13, in the case that the number of intersections between the corner of the battery cell 200 and the first grooves 21 per unit distance, denoted as 1/(W₂×tanθ), remains constant, when the ratio of the maximum transport distance of the electrolyte solution to the number of intersections between the corner of the battery cell 200 and the first grooves 21 per unit distance is greater than 100, where the ratio is denoted as (W₁×W₂×tanθ)/(sinθ×2), the maximum transport distance of the electrolyte solution is relatively long. In this case, the cycle performance test pass rate of the battery cell 200 shows a downward trend. When (W₁×W₂×tanθ)/(sinθ×2) is less than 30, for example, is 28 set out in Table 1, the arrangement of the first grooves 21 is excessively dense. Although this is beneficial for the transmission and storage of the electrolyte solution at the corner of the battery cell 200, this contributes no more to the cycle performance of the battery cell 200 and is a redundant design. The excessive number of first grooves 21 also impairs the energy density.

In summary, in the electrode plate 100, battery cell 200, and electronic device 300 described above, the surface of the first active material layer 20 on the side facing away from the current collector 10 is provided with a plurality of first grooves 21 arranged at equal intervals along the second direction X. The first grooves 21 increase the area infiltrated by the electrolyte solution on the first active material layer 20, and ensure sufficient contact between the first active material layer 20 and the electrolyte solution. In the case that the electrode plate 100 forms a jelly-roll battery cell, the first grooves 21 at the corner of the battery cell can store electrolyte solution and form an electrolyte solution transport channel to replenish the corner of the battery cell with the electrolyte solution, thereby reducing the risk of lithium deposition caused by insufficiency of electrolyte solution at the corner of the battery cell. 1/(W₂×tanθ) represents the number of intersections between the corner of the battery cell and the first grooves 21 per unit distance. An excessively small number (less than 0.5) of intersections results in fewer first grooves 21 at the corner of the battery cell, and leads to insufficiency of electrolyte solution replenishment at the corner of the battery cell, thereby giving rise to lithium deposition at the corner of the battery cell. An excessively large number (greater than 1.5) of intersections leads to an excess of the first grooves 21 and an excessively dense arrangement of the first grooves 21, and is a redundant design without additional benefit, and impairs the energy density of the electrode plate 100. By defining 0.5 ≤ 1/(W₂ × tanθ) ≤ 1.5, this application reduces the risk of lithium deposition, and increases the energy density of the electrode plate 100.

The embodiments described above are merely some specific embodiments of this application, but the protection scope of this application is not limited to such embodiments. Any variations or replacements made without departing from the technical solutions disclosed herein still fall within the disclosure scope of this application.

## Claims

1. An electrode plate, **characterized in that** the electrode plate comprises:
a current collector, wherein a thickness direction of the current collector is a first direction, a length direction of the current collector is a second direction, and a width direction of the current collector is a third direction;
a first active material layer, disposed on one side of the current collector in the first direction; a surface of the first active material layer on a side facing away from the current collector is provided with a plurality of first grooves arranged at equal intervals along the second direction; viewed along the first direction, each first groove extends from one side of the first active material layer in the third direction to the other side of the first active material layer in the third direction; an extension direction of each first groove is inclined relative to the second direction; extension directions of the plurality of first grooves are parallel to each other;
an angle between the extension direction of the each first groove (21) and the second direction (X) is θ, 0 < θ < 90°; and
a spacing between two adjacent first grooves in the second direction is W₂, θ and W₂ satisfy: 0.5 ≤ 1/(W₂ × tanθ) ≤ 1.5.

2. The electrode plate according to claim 1, **characterized in that** 1/2 < 1/(sinθ × 2) < K/2, and 1 < K < 2.

3. The electrode plate according to claim 2, **characterized in that** 30 ≤ (W₁ × W₂ × tanθ)/(sinθ × 2) ≤ 100, W₁ is a width of the current collector in the third direction, and W₂ is a spacing between two adjacent first grooves in the second direction.

4. The electrode plate according to claim 3, **characterized in that** along the first direction, a thickness h1 of the first active material layer and a depth h2 of the each first groove satisfy: 1/6 ≤ h2/h1 ≤ 3/4.

5. The electrode plate according to claim 4, **characterized in that** viewed along the extension direction of the each first groove, the each first groove comprises a bottom wall and two sidewalls that are connected to two sides of the bottom wall respectively; each sidewall is inclined relative to the bottom wall; an opening is formed at an end of the two sidewalls that is away from the bottom wall; and a projection of the bottom wall lies within a projection of the opening along the first direction.

6. The electrode plate according to any one of claims 1 to 5, **characterized in that** the electrode plate comprises two first active material layers; and the two first active material layers are disposed on two sides of the current collector respectively along the first direction.

7. The electrode plate according to claim 6, **characterized in that** along the first direction, a projection of the each first groove of one of the two first active material layers is parallel to a projection of the each first groove of the other of the two first active material layers.

8. The electrode plate according to claim 6, **characterized in that** along the first direction, a projection of the each first groove of one of the two first active material layers intersects with a projection of the each first groove of the other of the two first active material layers.

9. The electrode plate according to any one of claims 1 to 8, **characterized in that** along the first direction, a thickness H1 of the current collector satisfies: 3 µm ≤ H1 ≤ 15 µm.

10. A battery cell, **characterized in that** the battery cell comprises an electrode assembly, the electrode assembly comprises a positive electrode plate, a separator, and a negative electrode plate that are wound together; and the positive electrode plate or the negative electrode plate is the electrode plate according to any one of claims 1 to 9;
the electrode assembly comprises a first straight segment, a first bent segment, a second straight segment, and a second bent segment that are connected in sequence; the first straight segment and the second straight segment are disposed opposite to each other along a thickness direction of the battery cell; and the first bent segment and the second bent segment are disposed opposite to each other along a width direction of the battery cell; and
the electrode plate is provided with the plurality of the first grooves at positions located at the first bent segment and/or the second bent segment.

11. An electronic device, **characterized in that** the electronic device comprises the battery cell according to claim 10.
